# FASCICULE DE BREVET EUROPEEN

(11) **EP 1 340 995 B1**
(45) Date de publication et mention de la délivrance du brevet: **30.11.2011**
(21) Numéro de dépôt: 03100478.1
(22) Date de dépôt: 27.02.2003
(51) Int. Cl.: G01S 1/68

(54) **Balise de détresse, procédé et dispositif de surveillance de signaux de détresse, et véhicule comprenant un tel dispositif**
Notbake, Verfahren und Vorrichtung zur Überwachung von Notsignalen und eine solche Vorrichtung einschliessendes Fahrzeug
Distress beacon, method and device for monitoring distress signals and vehicle including such a device

(30) Priorité: 01.03.2002 FR 0202621
(43) Date de publication de la demande: 03.09.2003
(73) Titulaire: AIRBUS OPERATIONS, 31060 Toulouse (FR)
(72) Inventeur: Ceccom, René, 31470 SAIGUEDE (FR); Pichavant, Claude, 31100 TOULOUSE (FR)
(74) Mandataire: Poulin, Gérard

(56) Documents cités:
- EP-A- 0 107 596
- WO-A-99/43091
- DE-A- 19 922 608
- US-A- 4 850 031
- US-A- 4 978 945
- US-A- 5 073 972
- US-B1- 6 275 164

## Description

### DOMAINE TECHNIQUE

La présente invention concerne une balise de détresse, un procédé et un dispositif de surveillance de signaux de détresse, et un véhicule, par exemple un aéronef, un bateau, etc..., comprenant un tel dispositif.

### ETAT DE LA TECHNIQUE ANTERIEURE

De façon connue, des véhicules, tels que des aéronefs, des bateaux, etc..., peuvent être équipés de balises de détresse. Dans le cas des avions de transport civil utilisés pour franchir une grande étendue d'eau ou pour survoler certains pays, l'utilisation de telles balises est une exigence formulée par l'OACI (Organisation Internationale de l'Aviation Civile) (voir la convention de l'OACI dite "Convention de Chicago" : annexe 6, partie 1, chapitre 6, §6.17, septième édition (juillet 1998) ; modifiée par l'amendement N° 24 du 19 juillet 1999). Une des fréquences d'émission de détresse de ces balises est 121,5 MHz, qui est également la fréquence de détresse d'émission en phonie.

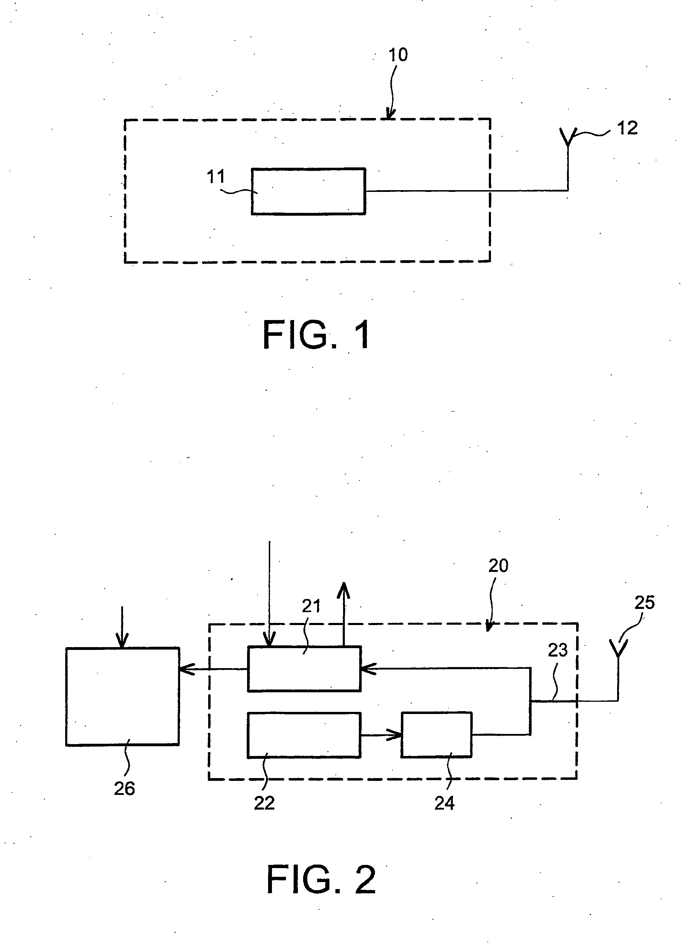

Classiquement, comme illustré sur la figure 1, une telle balise 10 comporte un étage émetteur VHF 11 raccordé à une antenne 12. Cet étage émetteur VHF peut notamment être activé par le pilote d'un aéronef, ou par un dispositif de détection de choc. Il émet alors un signal auditif caractéristique sur la fréquence 121,5 MHz (modulation de type A3X), et éventuellement une information codée, par exemple en morse, permettant d'identifier ladite balise. La fréquence de détresse peut aussi être utilisée par un opérateur radio en situation de détresse, qui émet alors un signal vocal avec une modulation de type A3E.

Cette fréquence de détresse est surveillée en permanence par les services de secours. Toutefois, il existe des zones de la surface terrestre non couvertes par de tels services de secours (zones désertiques, etc.). Dans ce cas, les équipages des véhicules munis de récepteurs VHF circulant dans de telles zones pratiquent une veille de ladite fréquence de détresse. Ils peuvent ainsi alerter des équipes de sauvetage si un signal de détresse est reçu et aussi aider à la localisation de la source émettrice du signal. Un tel mode de fonctionnement nécessite de consacrer un récepteur VHF dudit véhicule pour la surveillance de la fréquence de détresse. Or la plupart des avions de transport civil sont actuellement équipés de trois émetteurs/récepteurs VHF déjà utilisés pour les communications vocales avec les centres de contrôle et/ou avec les compagnies aériennes ainsi que pour les liaisons de données ("datalink") avec les compagnies aériennes. L'utilisation de l'un desdits récepteurs VHF pour la surveillance de la fréquence de détresse est pénalisante car dans ce cas seuls les deux émetteurs/récepteurs restants peuvent être utilisés pour les communications précitées.

Le problème se pose donc de surveiller en permanence les signaux reçus sur la fréquence de détresse sans monopoliser l'un des trois émetteurs/récepteurs VHF précités.

Une méthode permettant de résoudre ce problème consisterait à ajouter un quatrième émetteur/récepteur VHF à bord de l'avion. Toutefois, les avions actuels sont prévus pour fonctionner avec trois émetteurs/récepteurs VHF. L'ajout d'un quatrième nécessiterait des modifications importantes, notamment en ce qui concerne : les interfaces homme/machine permettant aux membres d'équipage de configurer lesdits émetteurs/récepteurs; les protocoles de communication entre lesdites interfaces homme/machine et lesdits émetteurs/récepteurs. Le coût de telles modifications serait par conséquent très élevé. De plus, il conviendrait d'ajouter une antenne dédiée au quatrième émetteur/récepteur VHF, qui pourrait poser des problèmes d'implantation sur le fuselage, notamment dans le cas d'avions de petites dimensions, en raison des contraintes liées à la nécessité de non-perturbation mutuelle des communications relatives aux différents émetteurs/récepteurs VHF considérés.

Une autre méthode consisterait à effectuer un multiplexage temporel entre la fréquence de détresse et une autre fréquence VHF utilisée par les membres d'équipage pour les communications avec les centres de contrôle ou les compagnies aériennes. Toutefois, il existe un risque de perte de signaux de détresse pendant les laps de temps consacrés auxdites communications.

Une autre méthode consisterait à utiliser un récepteur, dédié à la surveillance de la fréquence de détresse, en parallèle avec l'un des trois émetteurs/récepteurs VHF existants afin qu'il partage la même antenne que ce dernier. Toutefois, du fait de l'utilisation d'une antenne commune, ce nouveau récepteur ne serait pas opérationnel pendant les phases d'émission de l'émetteur/récepteur considéré.

La présente invention a pour objet une balise de détresse, un procédé et un dispositif, qui permettent de pallier un tel problème en surveillant la réception de signaux sur une fréquence de détresse et en activant un signal d'alarme en cas de détection d'un tel signal de détresse.

Deux documents de l'art connu sont analysés ci-dessous.

Le brevet US 5 073 972 concerne les communications avec mobiles et plus particulièrement un système pour étendre la portée d'un terminal ou d'un émetteur-récepteur miniaturisé portable et pour fournir un système pour piloter de tels émetteurs-récepteurs. Un système de commande à distance simplex/duplex combiné est utilisé pour étendre la portée du terminal portable et pour permettre à l'opérateur de ce terminal portable de réaliser une communication mains-libres grâce à l'utilisation de ses propres stations de base et antenne. Un système duplex modifié est utilisé pour commander des cycles d'émission-réception à partir du terminal portable de telle façon que le système puisse fonctionner sans se soucier des interférences.

Le brevet US 6 275 164 décrit un dispositif balise de localisation d'urgence de faible coût qui émet un numéro de série d'identification en plus du signal de balise. Cette émission comprend une version numérique codée Manchester modulée audio du numéro de série et une version analogique synthétisée vocale du numéro de série.

### EXPOSÉ DE L'INVENTION

La présente invention concerne une balise de détresse installée à bord d'un véhicule comprenant plusieurs émetteurs/récepteurs VHF, caractérisée en ce qu'elle comprend :
- un étage émetteur, qui émet un signal de détresse lorsque ladite balise est activée,
- un étage récepteur permettant une écoute en permanente d'une fréquence de détresse,
- un diplexeur relié audit étage émetteur et audit étage récepteur pour connecter l'un de ces deux étages à une antenne,
   et en ce que ledit étage récepteur est connecté à un calculateur dans le véhicule, qui active un signal discret et déclenche une alarme aux membres d'équipage lorsqu'un signal de détresse est reçu par l'étage de réception sur cette fréquence de détresse, et qui communique avec un dispositif de réglage desdits émetteurs/récepteurs VHF, lorsqu'une alarme est déclenchée, afin de présélectionner ladite fréquence de détresse sur ce dispositif de réglage, de sorte que lorsque les membres d'équipage veulent écouter ladite fréquence de détresse, il leur suffit alors de valider la fréquence de détresse sur l'un desdits émetteurs/récepteurs VHF.

Avantageusement cette balise comprend, en outre, un amplificateur disposé entre cet étage émetteur et ce diplexeur.

La présente invention concerne également un procédé de réception et de traitement d'un signal de détresse sur une fréquence de détresse par un étage récepteur d'un véhicule qui comprend plusieurs émetteurs/récepteurs VHF, dans lequel une balise de détresse, capable d'émettre un signal de détresse lorsqu'elle est activée, est installée à bord de ce véhicule et dans lequel cette balise comprend ledit étage récepteur et un module de détection connecté à la sortie dudit étage récepteur, caractérisé en ce qu'il comprend les étapes suivantes :
- écoute en permanence de cette fréquence de détresse au moyen de cet étage récepteur,
- détection par le module de détection de la réception d'un signal de détresse sur cette fréquence de détresse,
- activation d'un signal discret lors de la réception d'un tel signal de détresse,
- signalement d'une alarme aux membres d'équipage du véhicule,
- communication avec un dispositif de réglage des émetteurs/récepteurs VHF, lorsqu'une alarme est déclenchée, afin de présélectionner ladite fréquence de détresse sur ce dispositif de réglage,
- validation par les membres d'équipage de cette fréquence de détresse sur l'un de ces émetteurs/récepteurs VHF.

Dans un mode de réalisation, ce signal discret est envoyé à un organe de traitement qui délivre une information visuelle ou auditive à l'équipage du véhicule. L'acquittement de cette information par l'équipage peut inhiber l'alarme mais n'être pas transmis au module de détection qui maintient l'indication de réception d'un signal de détresse tant que la puissance de ce signal demeure supérieure à une valeur de seuil prédéterminée.

Dans un autre mode de réalisation, le véhicule étant un aéronef, une alarme ne peut être déclenchée que si ledit aéronef se trouve à une altitude supérieure à une valeur de seuil prédéterminée.

Dans un autre mode de réalisation, l'alarme n'est déclenchée que si la réception d'un signal sur la fréquence de détresse se prolonge pendant une durée supérieure à une valeur de seuil prédéterminée.

Dans un autre mode de réalisation, lors du déclenchement d'une alarme par un calculateur situé dans le véhicule, celui-ci communique avec un dispositif de réglage des émetteurs/récepteurs VHF situés dans ledit véhicule afin de présélectionner ladite fréquence de détresse sur ce dispositif de réglage, et lorsque les membres d'équipage souhaitent écouter cette fréquence de détresse, il leur suffit alors de la valider sur l'un de ces récepteurs VHF.

La présente invention concerne également un dispositif de réception et de traitement d'un signal de détresse, qui utilise une telle balise de détresse apte à recevoir des signaux de même fréquence que sa fréquence d'émission.

Ce dispositif peut avantageusement être utilisé dans un véhicule tel qu'un aéronef, un bateau....

Le procédé et le dispositif selon l'invention présentent plusieurs avantages.

Un premier avantage est relatif à la surveillance en permanence de la fréquence de détresse, hormis les phases pendant lesquelles cette fonction est volontairement inhibée, décollage et atterrissage d'un aéronef par exemple.

Etant donné l'utilisation d'une antenne commune pour l'émission et la réception de cette balise, ladite surveillance de la fréquence de détresse n'est pas possible lors de l'émission d'un signal de détresse par ladite balise. Toutefois, une telle caractéristique n'est pas gênante car dans le cas d'une telle émission les membres d'équipage n'ont pas suffisamment de temps à consacrer à l'écoute des autres véhicules en difficulté.

Un autre avantage est lié au fait que les émetteurs/récepteurs de l'avion restent disponibles pour les communications liées à la navigabilité de l'avion, en phonie et en liaison de données avec le contrôle au sol, les compagnies aériennes, etc. Selon le procédé objet de l'invention, l'un d'entre eux est utilisé, si les membres d'équipage l'estiment utile, seulement lorsqu'un signal de détresse a été effectivement détecté.

### BRÈVE DESCRIPTION DES DESSINS

La figure 1 illustre un dispositif de l'art antérieur.

La figure 2 illustre le dispositif de réception et de traitement d'un signal de détresse selon l'invention.

### EXPOSÉ DÉTAILLÉ DE MODES DE RÉALISATION PARTICULIERS

Dans la suite de la description on considère, à titre d'exemple, un véhicule de type aéronef équipé de trois équipements émetteurs/récepteurs VHF.

La figure 2 illustre une balise 20 selon l'invention qui comprend :
- un étage récepteur 21 recevant un signal d'alimentation, et ayant une sortie audio,
- un étage émetteur 22,
- un diplexeur 23 relié d'une part à l'étage récepteur 21 et d'autre part à l'étage émetteur 21 au travers d'un amplificateur 24.

Cette balise 20 est reliée d'une part à une antenne 25, et d'autre part à un calculateur 26 qui déclenche l'indication de réception d'un signal de détresse dans le cockpit de l'aéronef, ce calculateur 25 recevant une information d'altitude.

Le procédé de réception et de traitement d'un signal de détresse selon l'invention comprend les étapes suivantes :
- écoute en permanence d'une fréquence de détresse au moyen de l'étage récepteur dédié 21 intégré dans la balise de détresse 20 ;
- détection de la réception d'un signal de détresse sur cette fréquence de détresse ;
- activation d'une alarme lors de la réception d'un tel signal de détresse ;
- signalement de cette alarme aux membres d'équipage de l'aéronef.

Les membres d'équipage peuvent alors décider, s'ils le souhaitent, d'écouter ladite fréquence de détresse au moyen de l'un des trois récepteurs VHF précités.

La première étape de ce procédé consiste à écouter en permanence la fréquence de détresse au moyen de l'étage récepteur 21 intégré dans la balise de détresse 20. On a vu précédemment que l'emport d'une telle balise de détresse pour les aéronefs affectés à certains trajets était une exigence de l'OACI. Une telle balise est donc déjà installée à bord de l'aéronef dans lequel on souhaite mettre en oeuvre le procédé selon l'invention. En condition de fonctionnement normal de l'aéronef, cette balise n'émet pas. Par conséquent, son antenne peut être utilisée pour recevoir un signal VHF.

Selon l'invention, cette balise est modifiée en lui ajoutant l'étage récepteur 21 calé sur ladite fréquence de détresse et partageant l'antenne 25 de l'étape émetteur 22. Un module de détection non représenté sur la figure 2 est relié à la sortie de cet étage récepteur 21.

Lors de la détection d'une modulation de la fréquence porteuse (fréquence de détresse précitée), ce module de détection active un signal discret afin d'indiquer une alarme. Ce signal discret peut par exemple être relié à une entrée du calculateur 26 chargé de signaler cette alarme aux membres d'équipage, dans le cockpit. Cette information peut s'effectuer sous forme visuelle, auditive, etc.

L'acquittement de cette information par l'équipage inhibe l'alarme dans le cockpit mais n'est pas transmis au module de détection qui maintient l'indication de réception d'un signal reçu tant que la puissance de ce signal demeure supérieure à une valeur de seuil prédéterminée.

Ledit signal discret peut aussi être transmis au calculateur au moyen d'un bus de communication numérique.

Dans un mode préféré de réalisation de l'invention, une alarme ne peut être déclenchée que si l'avion se trouve à une altitude supérieure une valeur de seuil prédéterminée (par exemple 10.000 pieds, c'est-à-dire 3048 mètres). Cette limitation permet de ne pas perturber les membres d'équipage pendant les phases de décollage et d'atterrissage au cours desquelles ils doivent déjà effectuer un nombre de tâches important et surveiller de nombreux paramètres de l'aéronef.

Selon un autre mode préféré de réalisation de l'invention, l'alarme n'est déclenchée que si la réception d'un signal de détresse sur la fréquence de détresse se prolonge pendant une durée supérieure à une valeur de seuil prédéterminée. Cela permet d'éviter de signaler les détections de parasites sur cette fréquence.

Dans un autre mode préféré de réalisation de l'invention, comme illustré sur la figure 2, un amplificateur 24 est ajouté entre l'étage émetteur 22 et le diplexeur 23 permettant de relier l'antenne 25 à la fois à l'étage émetteur 22 et à l'étage récepteur 21 afin de pallier à la diminution de la puissance d'émission en sortie d'antenne 25 liée audit diplexeur 23.

Dans un autre mode préféré de réalisation de l'invention, lors du déclenchement d'une alarme par ledit calculateur, celui-ci communique avec un dispositif de réglage de tous les émetteurs/récepteurs VHF de l'avion, tel que par exemple RMP ("Radio Management Panel"), VHF Control Panel, RAIMP ("Radio and Audio Integrated Management Panel"), RCP ("Radio Control Panel") ou RTP ("Radio Tuning Panel"), afin de présélectionner ladite fréquence de détresse sur ce dispositif de réglage. Si les membres d'équipage souhaitent écouter cette fréquence de détresse, il leur suffit alors de la valider sur l'un des trois récepteurs VHF possibles.

L'invention concerne également un dispositif comprenant une telle balise de détresse intégrant un récepteur permettant de mettre en oeuvre ce procédé.

## Revendications

1. Balise de détresse installée à bord d'un véhicule comprenant plusieurs émetteurs/récepteurs VHF, **caractérisée en ce qu'**elle comprend :
- un étage émetteur (22), qui émet un signal de détresse lorsque ladite balise est activée,
- un étage récepteur (21) permettant une écoute en permanente d'une fréquence de détresse,
- un diplexeur relié audit étage émetteur (22) et audit étage récepteur (21) pour connecter l'un de ces deux étages à une antenne,
et **en ce que** ledit étage récepteur est connecté à un calculateur (26) dans le véhiculé, qui active un signal discret et déclenche une alarme aux membres d'équipage lorsqu'un signal de détresse est reçu par l'étage de réception sur cette fréquence de détresse, et qui communique avec un dispositif de réglage desdits émetteurs/récepteurs VHF, lorsqu'une alarme est déclenchée, afin de présélectionner ladite fréquence de détresse sur ce dispositif de réglage, de sorte que lorsque les membres d'équipage veulent écouter ladite fréquence de détresse, il leur suffit alors de valider la fréquence de détresse sur l'un desdits émetteurs/récepteurs VHF.

2. Balise selon la revendication 1, comprenant un amplificateur (24) disposé entre l'étage émetteur (22) et le diplexeur (23).

3. Procédé de réception et de traitement d'un signal de détresse sur une fréquence de détresse par un étage récepteur d'un véhicule qui comprend plusieurs émetteurs/récepteurs VHF, dans lequel une balise de détresse, capable d'émettre un signal de détresse lorsqu'elle est activée, est installée à bord de ce véhicule et dans lequel cette balise comprend ledit étage récepteur et un module de détection connecté à la sortie dudit étage récepteur, **caractérisé en ce qu'**il comprend les étapes suivantes :
- écoute en permanence de cette fréquence de détresse au moyen de cet étage récepteur (21),
- détection par le module de détection de la réception d'un signal de détresse sur cette fréquence de détresse,
- activation d'un signal discret lors de la réception d'un tel signal de détresse,
- signalement d'une alarme aux membres d'équipage du véhicule,
- communication avec un dispositif de réglage des émetteurs/récepteurs VHF, lorsqu'une alarme est déclenchée, afin de présélectionner ladite fréquence de détresse sur ce dispositif de réglage,
- validation par les membres d'équipage de cette fréquence de détresse sur l'un de ces émetteurs/récepteurs VHF.

4. Procédé selon la revendication 3, dans lequel ce signal discret est envoyé à un organe de traitement (25) qui délivre une information visuelle ou auditive aux membres d'équipage.

5. Procédé selon la revendication 4, dans lequel l'acquittement de cette information par les membres d'équipage inhibe l'alarme mais n'est pas transmis au module de détection qui maintient l'indication de réception d'un signal de détresse tant que la puissance de ce signal demeure supérieure à une valeur de seuil prédéterminée.

6. Procédé selon la revendication 3, dans lequel, le véhicule étant un aéronef, une alarme ne peut être déclenchée que si ledit aéronef se trouve à une altitude supérieure à une valeur de seuil prédéterminée.

7. Procédé selon la revendication 3, dans lequel l'alarme n'est déclenchée que si la réception d'un signal sur la fréquence de détresse se prolonge pendant une durée supérieure à une valeur de seuil prédéterminée.

8. Dispositif de réception et de traitement d'un signal de détresse, comprenant une balise de détresse selon la revendication 1, apte à recevoir des signaux de même fréquence que sa fréquence d'émission.

9. Utilisation du dispositif selon la revendication 8 dans un véhicule.

## Claims

1. Distress beacon installed onboard a vehicle comprising a plurality of VHF transmitters/receivers **characterised in that** it comprise:
- a transmitter stage (22), which transmits a distress signal when said beacon is activated,
- a receiver stage (21) for continuous listening to a distress frequency,
- a diplexer connected to said transmitter stage (22) and to said receiver stage (21) for connecting one of these two stages to an antenna,
and **in that** said receiver stage is connected to a computer (26) in the vehicle, which activates a discrete signal and triggers an alarm to the crew members when a distress signal is received by the receiver stage on said distress frequency, and communicates with a device for tuning said VHF transmitters/receivers, when an alarm is triggered, in order to preselect said distress frequency on this tuning device, such that when members of the crew want to listen to said distress frequency, they simply need to validate the distress frequency on one of said VHF transmitters/receivers.

2. Beacon according to claim 1 comprising an amplifier (24) placed between the transmitter stage (22) and the diplexer (23).

3. Process for receiving and processing a distress signal on a distress frequency by a receiver stage of a vehicle comprising a plurality of VHF transmitters/receivers, wherein a distress beacon, capable of transmitting a distress signal when it is activated, is installed onboard this vehicle and wherein this beacon comprises said receiver stage and a detection module connected to the output of said receiver stage, **characterized in that** it comprises the following steps:
- continuous listening to this distress frequency using this receiver stage (21),
- detection by the detection module of the reception of a distress signal on this distress frequency,
- activation of a discrete signal when such a distress signal is received,
- signalling of an alarm to the vehicle crew members,
- communication with a device for tuning the VHF transmitters/receivers, when an alarm is triggered, in order to preselect said distress frequency on this tuning device,
- validation by the crew members of this distress frequency on one of these VHF transmitters/receivers.

4. Process according to claim 3, wherein this discrete signal is sent to a processing device (25) that outputs visual or audio information to the crew members.

5. Process according to claim 4, wherein acknowledgement of this information by the crew members inhibits the alarm but is not transmitted to the detection module which maintains the indication that a distress signal has been received as long as the power of this signal remains greater than a predetermined threshold value.

6. Process according to claim 3, wherein the vehicle is an aircraft and wherein an alarm can only be triggered if the altitude of said aircraft is greater than a predetermined threshold value.

7. Process according to claim 3, wherein the alarm is not triggered unless a signal is received on the distress frequency for a period exceeding a predetermined threshold value.

8. Device for receiving and processing a distress signal, comprising a distress beacon according to claim 1, capable of receiving signals of the same frequency as the transmission frequency thereof.

9. Use of the device according to claim 8 in a vehicle.

## Patentansprüche

1. Notfunkbake, die an Bord eines Fahrzeugs installiert ist, die mehrere VHF-Sender/Empfänger umfasst, **dadurch gekennzeichnet, dass** sie umfaßt:
- eine Senderstufe (22), die ein Notsignal sendet, wenn die Funkbake aktiviert ist,
- eine Empfängerstufe (21), die ein permanentes Abhören einer Notfrequenz ermöglicht,
- einen Duplexer, der mit der Senderstufe (22) und der Empfängerstufe (21) verbunden ist, zur Verbindung von einer dieser beiden Stufen mit einer Antenne,
und dass die Empfängerstufe mit einem Rechner (26) in dem Fahrzeug verbunden ist, der ein diskretes Signal aktiviert und einen Alarm für die Besatzungsmitglieder auslöst, wenn ein Notsignal durch die Empfangsstufe auf diese Notfrequenz empfangen wird, und der mit einer Steuervorrichtung für die VHF-Sender/Empfänger kommuniziert, wenn ein Alarm ausgelöst wird, um die Notfrequenz an dieser Steuervorrichtung derart vorzuwählen, dass, wenn die Besatzungsmitglieder die Notfrequenz abhören wollen, es für diese dann ausreichend ist, die Notfrequenz auf einem der VHF-Sender/Empfänger als gültig zu erklären.

2. Funkbake nach Anspruch 1, die einen Verstärker (24) umfasst, der zwischen der Senderstufe (22) und dem Duplexer (23) angebracht ist.

3. Verfahren zum Empfangen und zur Behandlung eines Notsignals auf einer Notfrequenz durch eine Empfängerstufe eines Fahrzeugs, umfassend mehrere VHF-Sender/Empfänger, wobei eine Notfunkbake, die ein Notsignal senden kann, wenn sie aktiviert ist, an Bord dieses Fahrzeugs installiert ist und wobei diese Funkbake die Empfängerstufe und ein mit dem Ausgang der Empfängerstufe verbundenes Detektionsmodul umfasst, **dadurch gekennzeichnet, dass** das Verfahren die folgenden Schritte umfasst:
- permanentes Abhören dieser Notfrequenz mittels dieser Empfängerstufe (21),
- Detektion des Empfangs eines Notsignal auf dieser Notfrequenz durch das Detektionsmodul,
- Aktivierung eines diskreten Signals beim Empfang eines derartigen Notsignals,
- Signalisierung eines Alarms an Besatzungsmitglieder des Fahrzeugs,
- Kommunikation mit einer Steuervorrichtung der VHF-Sender/Empfänger, wenn ein Alarm ausgelöst wird, um die Notfrequenz an dieser Steuervorrichtung vorzuwählen,
- Gültigerklärung dieser Notfrequenz auf einem dieser VHF-Sender/Empfänger durch die Besatzungsmitglieder.

4. Verfahren nach Anspruch 3, wobei das diskrete Signal zu einem Behandlungsorgan (25) gesendet wird, das eine sichtbare oder hörbare Information an die Besatzungsmitglieder liefert.

5. Verfahren nach Anspruch 4, wobei das Quittieren dieser Information durch die Besatzungsmitglieder den Alarm hemmt, jedoch nicht an das Detektionsmodul übertragen wird, das die Anzeige des Empfangs eines Notsignals aufrechterhält, solange die Stärke dieses Signals über einem vorgegebenen Schwellenwert bleibt.

6. Verfahren nach Anspruch 3, wobei, wenn das Fahrzeug ein Luftfahrzeug ist, ein Alarm nur ausgelöst wird, wenn sich das Luftfahrzeug in einer Höhe über einem vorgegebenen Schwellenwert befindet.

7. Verfahren nach Anspruch 3, wobei der Alarm nur ausgelöst wird, wenn der Empfang eines Signals auf der Notfrequenz über eine längere Zeitdauer als ein vorgegebener Schwellenwert andauert.

8. Vorrichtung zum Empfang und zur Behandlung eines Notsignals, die eine Notfunkbake nach Anspruch 1 umfaßt, die Signale der gleichen Frequenz wie deren Sendefrequenz empfangen kann.

9. Verwendung der Vorrichtung nach Anspruch 8 in einem Fahrzeug.
